## Europäisches Patentamt

## European Patent Office

## Office européen des brevets

(11) Veröffentlichungsnummer : **0 157 898**
**B1**

(12) **EUROPÄISCHE PATENTSCHRIFT**

(45) Veröffentlichungstag der Patentschrift :
**15.06.88**

(21) Anmeldenummer : **84104658.4·**

(22) Anmeldetag : **25.04.84**

(51) Int. Cl.⁴ : **A 01 F 15/14**

(54) Vorrichtung zum Binden von Rollballen aus landwirtschaftlichem Erntegut.

(30) Priorität : **13.04.84 DE 3414080**

(43) Veröffentlichungstag der Anmeldung :
**16.10.85 Patentblatt 85/42**

(45) Bekanntmachung des Hinweises auf die Patenterteilung : **15.06.88 Patentblatt 88/24**

(84) Benannte Vertragsstaaten :
**AT BE CH FR GB IT LI**

(56) Entgegenhaltungen :
**DE-A- 2 640 563**
**DE-A- 3 042 254**
**FR-A- 2 457 636**
**US-A- 3 064 556**

(73) Patentinhaber : **Klöckner-Humboldt-Deutz AG Zweigniederlassung Fahr**
**D-7702 Gottmadingen (DE)**

(72) Erfinder : **Schaible, Siegfried, Dipl.-Ing.**
**Breslauer Strasse 15**
**D-7700 Singen (DE)**

(74) Vertreter : **Haft, Berngruber, Czybulka**
**Postfach 14 02 46 Hans-Sachs-Strasse 5**
**D-8000 München 5 (DE)**

## Beschreibung

Die vorliegende Erfindung betrifft eine Vorrichtung zum Umwickeln von Rollballen aus landwirtschaftlichem Erntegut, gemäß dem Oberbegriff des Patentanspruches 1.

Großballenpressen, mit denen Rollballen von bis zu mehreren Kubikmetern Inhalt gewickelt werden, finden immer weitere Verbreitung in der Landwirtschaft. Derartige Maschinen weisen üblicherweise eine Rollkammer auf, an deren Umfang eine Vielzahl von gleichsinnig angetriebenen Walzen vorgesehen sind, die das Erntegut z. B. Heu, Stroh oder Maisstroh, zu zylindrischen Ballen formen, die am Ende des Rollvorganges mit einem geeigneten Bindegarn umwickelt werden, wonach sie durch die rückwärtige zu öffnende Heckklappe der Rollballenpresse ausgestoßen werden.

Um derartige Rollballen nach der fertigen Wicklung mit einem Garn zu umwickeln, ist es bereits aus der DE-A-30 42 254 bekannt, eine Umwicklungsvorrichtung mit einem Leitorgan zur Führung eines Garnstranges entlang einem sich über die Breite eines Preßraumgehäuses erstreckenden Einzugsspalt vorzusehen, mit einem Federelement, welches durch die Bewegung des Leitorgans aus einer Ruhestellung in eine entgegengesetzte Startstellung gespannt wird und welches das Leitorgan zurück in die Ruhestellung zieht, wobei eine Steuervorrichtung die Rückbewegung während des Umschnürungsvorgangs steuert. Die Steuervorrichtung ist dabei als Klinkenschaltwerk ausgebildet, welches das Leitorgan gegen die Kraft des Federelementes in Position hält und seine schrittweise Rückbewegung unter der Federkraft freigibt.

Bei dieser bekannten Vorrichtung ist in der Mitte eines Querträgers ein Garnleitarm an einer Schwenkwelle drehbar gelagert, wobei der Garnleitarm eine bogenförmige Bahn beschreibt und entlang dem Einzugsspalt gegen die Kraft der Zugfeder entlangstreicht. Kurz vor Beendigung des Rollvorgangs wird der Garnleitarm in eine mittlere Stellung geschwenkt und dort vorübergehend gehalten. In dieser Stellung wird das freie Garnende von dem Rollballen erfaßt und mitgenommen. Durch ein weiteres manuelles Ziehen an der Auslösevorrichtung wird der Garnleitarm in seine Startstellung, die dem Ende des Rollballens entspricht, geschwenkt und ebenfalls durch Seilzug vorübergehend festgehalten um auf dem Rollballen parallele Anfangswindungen an seiner Stirnseite aufbringen zu können. Die Anzahl und die Lage der Anfangswindungen ist dabei manuell einzustellen.

Nach dem Loslassen des Auslöseseils beginnt die schraubenförmige Umschnürung des Rollballens. Dabei überstreicht der Garnleitarm den Rollballen von seiner Startstellung an einem Ende des Rollballens bis zu seiner Anfangsstellung am anderen Ende des Rollballens und umwickelt diesen schraubenförmig, ohne daß sich das Garn auf der Oberfläche des Rollballens kreuzt.

Ferner ist aus der US-A-3 064 556 eine Vorrichtung zum Binden von Rollballen aus landwirtschaftlichem Erntegut bekannt, die mindestens eine Garnrolle, eine Garnleiteinrichtung für den Garnstrang und eine Steuervorrichtung für die Garnleiteinrichtung aufweist. Die Garnleiteinrichtung enthält hierbei zwei Garnleitarme, die den zu umwickelnden Rollballen ausgehend von dessen beiden Enden spiralförmig bis zu seiner Mitte umwickeln, wobei die beiden Garnleitarme von einer Feder beaufschlagt werden und von einem Getriebe gesteuert werden.

Es wurde nun festgestellt, daß aufgrund der geringen Reibung zwischen dem zu umwickelnden landwirtschaftlichen Erntegut und dem Bindegarn der von der Umwicklungsvorrichtung ausgeübte Druck nicht ausreichend ist, so daß bei einer derartigen schraubenlinienförmigen Umwicklung der Ballen nicht stramm genug gewickelt wird. Ferner dauert es eine erhebliche Zeit bis ein derartiger Garnleitarm die gesamte Ballenoberfläche überstrichen hat, so daß vom Beginn des Wickelvorgangs bis zum Ende des Wickelvorgangs ca. 50 bis 60 Sekunden vergehen ; diese Zeit ist bereits erheblich größer als der eigentliche Wickelvorgang für den Rollballen.

Aufgabe der vorliegenden Erfindung ist es, eine Vorrichtung zum Umwickeln von Rollballen aus landwirtschaftlichem Erntegut zu schaffen, bei der die Rollballen mit erheblich größerer Festigkeit als bisher umwickelt werden können und die erheblich schneller arbeitet, so daß der Erntevorgang insgesamt bedeutend verkürzt wird.

Ausgehend von einer Vorrichtung der eingangs genannten Art wird zur Lösung dieser Aufgabe vorgeschlagen, daß die Garnleiteinrichtung zwei Garnleitarme aufweist, deren Schwenkachsen im Abstand voneinander an einer Querstrebe angeordnet sind, daß die beiden Garnleitarme gegensinnig zueinander in zwei nebeneinander liegenden Ebenen verschwenkbar sind und daß die beiden Garnleitarme über je eine Pleuelstange die an den Enden einer sich mit dem Getriebe drehenden Schwinge angelenkt sind, antreibbar sind von einer Anfangsstellung, in der sich die beiden Garnleitarme überkreuzen und die einem mittigen Umwickeln des Ballens entspricht über eine Maximalstellung, die dem gleichzeitigen Umwickeln der beiden Enden des Ballens entspricht bis zu einer Endstellung, die im wesentlichen der Anfangsstellung entspricht.

Das Getriebe kann entweder ein Klinkentrieb oder ein Planetentrieb mit einer Übersetzung von etwa 1 : 50 bis 1 : 60 sein.

Die Vorrichtung ist vorzugsweise mit einer Auslöseeinrichtung versehen, die über ein Gestänge mit der Heckklape der Rollballenpresse verbunden ist und die Vorrichtung beim Öffnen der Heckklappe in Betrieb setzt.

Die Auslöseeinrichtung weist vorteilhafterweise eine mit einer Aussparung versehene Strebe auf, in die ein Sperrhaken eingreift, wobei der Sperrhaken über eine Zugfeder mit einem der Garnleitarme verbunden ist.

Besonders günstig ist es, wenn die Schubstange zur Betätigung der Auslöseeinrichtung mit einem zweiarmigen verschwenkbaren Hebel verbunden ist, der seitlich am vorderen Teil der Preßkammer angelenkt ist und durch den rückwärtigen verschwenkbaren Teil der Preßkammer betätigt wird.

Vorzugsweise sind an den äußeren freien Enden der Garnleitarme schwenkbeweglich angebrachte Verlängerungen vorgesehen, an deren unteren Enden Garnbremsen angeordnet sind, die die frei herabhändenden Garnenden bis nahe an den Einzugsspalt führen.

Die Vorrichtung weist ferner eine Schneidvorrichtung auf, die durch einen der Garnleitarme von einer Ruhestellung in eine Arbeitsstellung und umgekehrt verschiebbar ist.

Bei einem besonders vorteilhaften Ausführungsbeispiel ist die Schneidvorrichtung über eine Schaltkulisse mit dem Garnleitarm verbunden, wobei am Garnleitarm ein Nocken vorgesehen ist, der in eine Ausnehmung der Schaltkulisse eingreift, während ein schwenkbeweglich an einem Bolzen gelagerter zweiarmiger Hebel vorgesehen ist, mit einem Vorsprung, auf dem sich der Garnleitarm während seiner Bewegung abstützt.

Die Schaltkulisse kann mit einer Feder derart verbunden sein, daß die Ausnehmung am Nocken anliegt während der Garnleitarm an seiner Rückseite mit einem Nocken versehen sein kann, der mit einem Vorsprung der Schaltkulisse zusammenwirkt.

Die Schneidvorrichtung selbst ist vorteilhafterweise mit zwei Messern bestückt, so daß die beiden Garne gleichzeitig nach Beendigung des Bindevorgangs abgeschnitten werden.

Vorzugsweise ist die Seilscheibe über einen Exzenter und über eine Schwinge mit dem Getriebe verbunden, wobei das Getriebe mit einer Walze verbunden ist, die einen Kurbeltrieb für die Garnleitarme betätigt, an dem die beiden Pleuelstangen um 180° versetzt zueinander angeordnet sind.

Die erfindungsgemäße Vorrichtung weist mehrere Vorteile auf. Da Beginn und Ende des Bindevorgangs in der Ballenmitte liegen, überkreuzen sich die beiden Garnstränge bereits zu Beginn und vor dem Ende des Bindevorgangs, so daß die Garnstränge mit erhöhtem Druck stramm um den Ballen gewickelt werden können. Ohne derartiges Überkreuzen, wie es bei vielen bisher bekannten Umwicklungssystemen der Fall ist, werden die derart umwickelten Ballen leicht konisch, da eine stramme Wicklung erst nach Erreichen des ersten Überkreuzens erfolgen kann.

Durch das erfindungsgemäß erfolgende sofortige Überkreuzen gleich zu Beginn des Bindevorgangs können sofort stramme Anfangswindungen um den Ballen gelegt werden, der dadurch besser zusammengehalten wird.

Durch die beiden Garnleitarme, die jeweils nur noch etwas mehr als die Hälfte des Ballens umwickeln, wird eine erhebliche Verkürzung der Umwicklungszeit erzielt. Die fertige Umwicklung eines Großballens kann in 8 bis 10 Sekunden ermöglicht werden.

Durch das Auslösen der Umwicklungsvorrichtung durch die sich öffnende Heckklappe, d. h. nach Fertigstellung des gewickelten Ballens, braucht der Maschinenführer nicht mehr manuell einzugreifen. Der Ballen wird gewickelt, gebunden und ausgestoßen, da nach fertiger Umwicklung die beiden Garne automatisch abgetrennt werden und die Umwicklungsvorrichtung automatisch stehenbleibt.

Eine konische Ballenbildung wird dadurch vermieden, daß in der Ballenmitte mehrere sich überkreuzende Windungen gelegt werden, sowie an den beiden Ballenenden ebenfalls mehrere dicht benachbarte Windungen gelegt werden, während die dazwischenliegenden Bereiche durch die Auslegung der Antriebskinematik für die beiden Garnleitarme schneller überfahren werden.

Im folgenden wird die Erfindung anhand der Zeichnung näher erläutert, in der ein vorteilhaftes Ausführungsbeispiel dargestellt ist.

Es zeigen :

Figur 1 eine Seitenansicht einer erfindungsgemäßen Rundballenpresse ;

Figur 2a eine vergrößerte Ansicht der erfindungsgemäßen Vorrichtung ;

Figur 2b eine vergrößerte Darstellung der Auslöseeinrichtung ;

Figuren 3a und 3b zwei Seitenansichten der erfindungsgemäßen Vorrichtung in verschiedenen Stellungen und

Figuren 4a bis 4c das Wickelschema eines Rollballens.

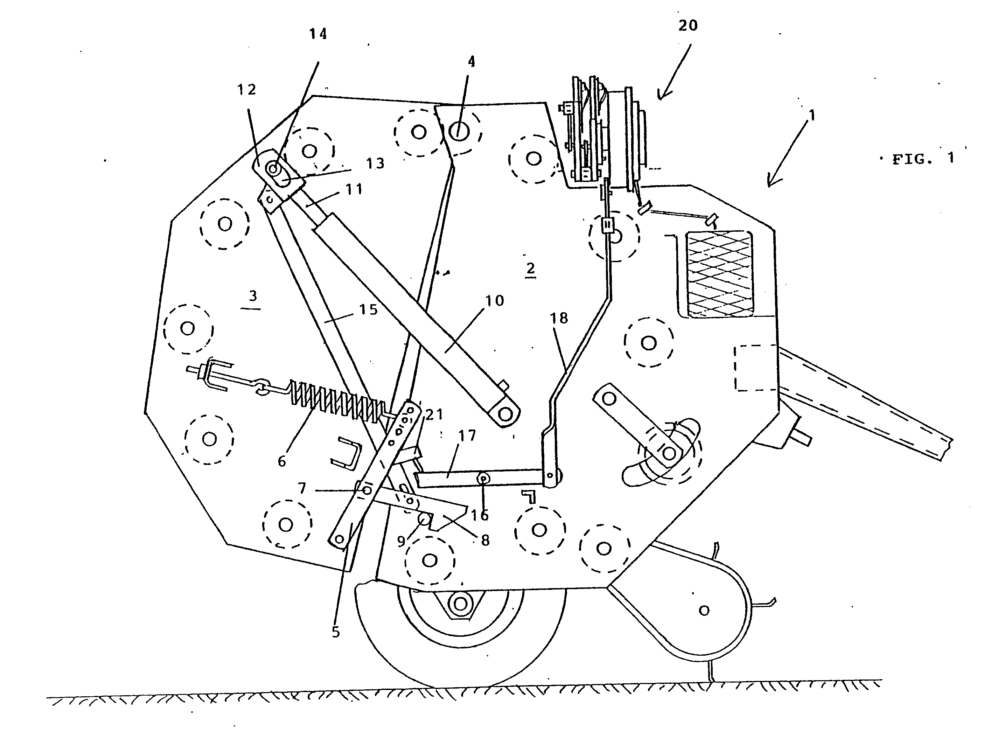

Die in Figur 1 dargestellte Rundballenpresse ist mit einer Pick-up-Vorrichtung versehen zur Aufnahme des Erntegutes und Einführung in die Preßkammer zum Formen zylindrischer Ballen und die von einem vorderen feststehenden Teil 2 und einem rückwärtigen, um eine horizontal liegende Achse 4 im Uhrzeigersinn nach oben verschwenkbaren Teil 3 begrenzt wird.

Während des normalen Betriebes sind die Teile 2 und 3 miteinander verriegelt. Zur Verriegelung dient ein schwenkbeweglich gelagerter Hebel 5, an dessen freiem Ende eine Zugfeder 6 angreift. Sowohl der Hebel 5 als auch die Zugfeder 6 ist am rückwärtigen Teil 3 der Preßkammer angelenkt.

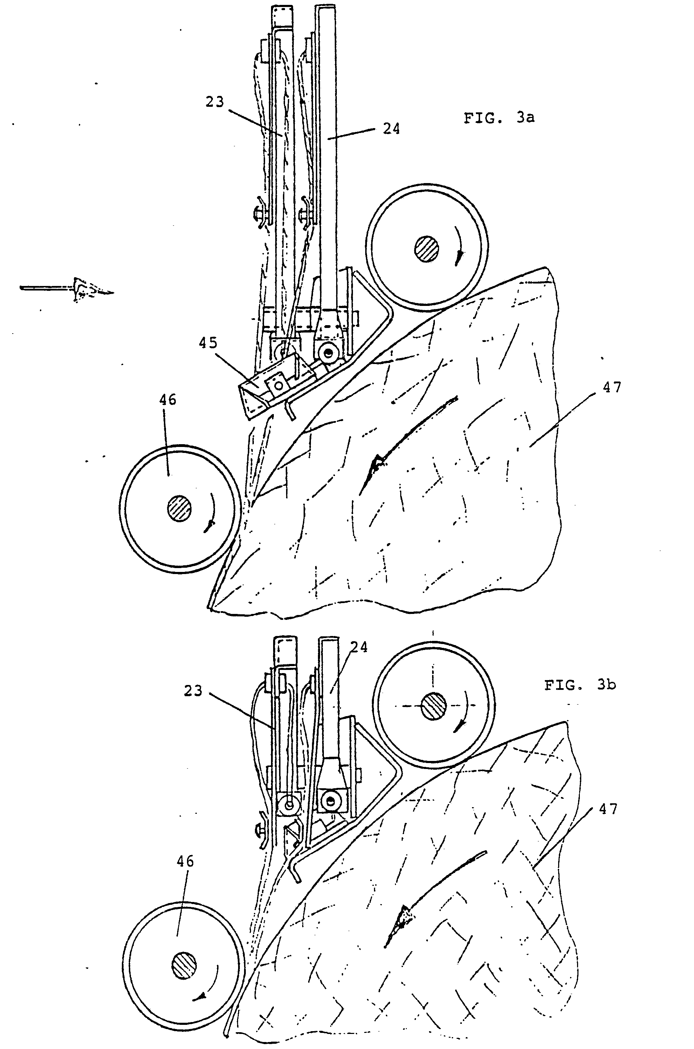

Etwa auf halber Länge des Hebels 5 ist um eine horizontale Achse 7 ein Verriegelungshaken 8 schwenkbeweglich gelagert, der einen feststehenden Bolzen 9 des vorderen Teils 2 der Preßkammer übergreift. Mit Hilfe des Hebels 5, der Zugfeder 6, des Verriegelungshakens 8 und des Bolzens 9 werden der rückwärtige Teil 3 sowie der vordere feststehende Teil 2 der Preßkammer in gegenseitiger Anlage gehalten, sofern auf den rückwärtigen Teil der Preßkammer keine Kräfte im Sinne eines Auslenkens einwirken. Ferner sind entlang des Umfangs der Preßkammer eine Vielzahl von Preßwalzen angeordnet, von denen eine in Figur 3b mit 46 bezeichnet ist.

Damit der rückwärtige Teil 3 der Preßkammer nach oben ausgeschwenkt werden kann, ist ein einfach wirkender hydraulischer Zylinder 10 vorgesehen. Das freie Ende der Kolbenstange 11 des Hydraulikzylinders 10 ist mit einem Gabelkopf 12 bestückt. Innerhalb dieses Gabelkopfes 12 ist ein Langloch 13 eingearbeitet, welches einen feststehenden Bolzen 14 umschließt. Ferner ist der Gabelkopf 12 über eine Strebe 15 mit dem Verriegelungshaken 8 verbunden. Beim Ausfahren der Kolbenstange 11 des Hydraulikzylinders 10 wird zunächst über die Strebe 15 der Verriegelungshaken 8 nach oben gezogen, so daß anschließend, da die Verriegelung aufgehoben ist, der rückwärtige Teil 3 der Preßkammer nach oben zum Zwecke des Entladens eines fertig geformten Rollballens verschwenkt werden kann. Umgekehrt erfolgt die Verriegelung zwischen den Teilen 2 und 3 automatisch beim Einfahren der Kolbenstange 11.

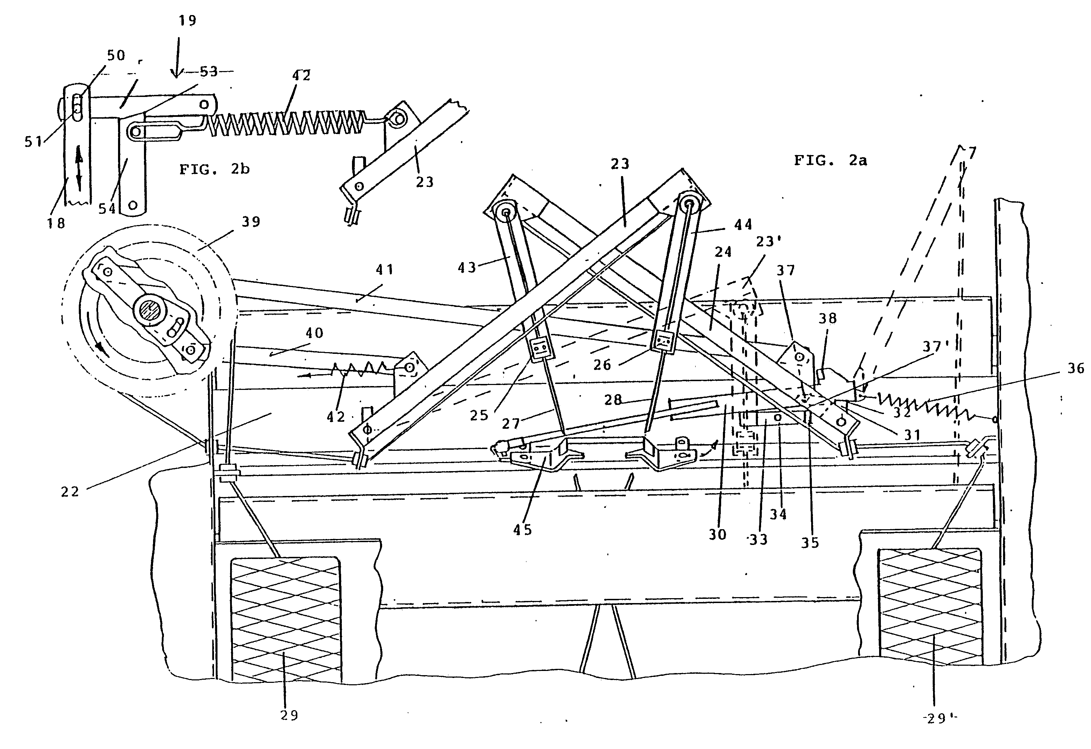

Seitlich am vorderen Teil 2 der Preßkammer ist um einen Bolzen 16 ein zweiarmiger Hebel 17 schwenkbeweglich gelagert. Das in der Zeichnung rechts liegende Ende des zweiarmigen Hebels 17 ist über eine Schubstange 18 mit einer Auslösevorrichtung 19 (Figur 2b) der Bindeeinrichtung 20 verbunden.

Sobald der rückwärtige Teil 3 der Preßkammer gegen die Kraft der Zugfeder ausgelenkt wird, wenn ein Rundballen nahezu seine endgültige Größe erreicht hat, wird der Hebel 5 im Uhrzeigersinn um die Achse 7 verschwenkt. Eine am Hebel 5 angebrachte Anschlagnase 21 drückt dann auf das linksliegende Ende des Hebels 17, wodurch die Schubstange nach oben geschoben wird. Die Bindeeinrichtung 20 wird dann entriegelt und ist betriebsbereit.

Die Entriegelung der Auslöseeinrichtung 19 (Figur 2b) erfolgt dadurch, daß die Schubstange 18 eine Strebe 52 anhebt, an deren einen Ende sie über einen Bolzen 51 angelenkt ist, der ein Langloch 50 in der Schubstange 18 durchsetzt. Durch das Anheben der Strebe 52, die mit einer Aussparung 53 versehen ist, wird der dort eingreifende Sperriegel 54 freigegeben, der an seinem unteren Ende am Gehäuse angelenkt ist. Der Sperriegel 54 ist über eine Zugfeder ausreichender Länge und Stärke 42 mit einem der Garnleitarme 23 verbunden, der nach Entriegeln der Auslöseeinrichtung 19 aufgrund der Schwerkraft ein Stück nach unten fällt, wie es in Figur 2a durch die gestrichelte Stellung 23' angedeutet ist. Aufgrund der Verbindung zwischen den beiden Garnleitarmen bewegt sich auch der zweite Garnleitarm, der in seiner Anfangsstellung den ersten Garnleitarm überkreuzt, um den gleichen Weg nach unten, wodurch die frei herabhängenden Garnenden in den Einzugsspalt zwischen Rollballen und Preßwalze gelangen und mitgenommen werden.

In Figur 2a sind die Garnleitarme und ihr Antriebsmechanismus sowie die Schneidvorrichtung dargestellt. Die Garnleitarme 23, 24 sind mit ihren unteren Enden verschwenkbar an einer Querstrebe 22 angelenkt, die sich parallel zu den Preßwalzen erstreckt und mit dem Gehäuse der Rundballenpresse fest verbunden ist. Jeder Garnleitarm 23, 24 ist mittels einer Pleuelstange 40, 41 mit einem Getriebe verbunden, das z. B. ein Planetengetriebe oder ein Klinkentrieb sein kann. Das Getriebe, das eine Untersetzung von 1 : 50 bis 1 : 60 aufweist, ist mit einer Seilscheibe 39 verbunden, die entlang ihres Außenumfangs mehrere Rillen aufweist. Die Pleuelstangen können an einem Kurbeltrieb angelenkt sein, der mit einer Walze verbunden ist, die wiederum über eine Schwinge und ein Exzenter mit der Seilscheibe verbunden sind, welche von dem sich abspulenden Garn 28 angetrieben wird. Das Garn 28 wird von einer Garnvorratsrolle 29 abgegeben, umschlingt die Seilscheibe 39 mindestens einmal und läuft entlang des Garnleitarmes 23 bis zu dessen oberen freien Ende, an dem ein schwenkbeweglich angebrachtes Verlängerungsstück 44 vorgesehen ist, mit einer an seinem unteren Ende angeordneten Garnbremse 26. Analog dazu verläuft ein zweites Garn 27 von einer Garnvorratsrolle 29' an dem zweiten Garnleitarm 24 entlang und an dessen schwenkbeweglich angebrachter Verlängerung 43, an der ebenfalls eine Garnbremse 25 vorgesehen ist.

Die Garnleitarme 23, 24 sind gegensinnig verschwenkbar, wobei die Anlenkpunkte an der Querstrebe 21 versetzt bezüglich der Längsachse dieser Querstrebe derart sind, daß sich die Garnleitarme 23, 24 beim gegensinnigen Verschwenken nicht berühren.

Nach Fertigstellung eines Rollballens im Preßraum der Rundballenpresse betätigt die Auslöseeinrichtung gemäß Figur 2b, die mit dem rückwärtigen verschwenkbaren Teil 3 des Preßraums verbunden ist, die erfindungsgemäße Vorrichtung. Der so entriegelte Garnleitarm 23 bewegt sich aufgrund der Schwerkraft um ein Stück nach unten, wie es in Figur 2a durch 23' angedeutet ist. Aufgrund der Verbindung des Garnleitarmes 23 über seine Pleuelstange 40 mit dem Getriebe und der Seilscheibe 39, wird der zweite Garnleitarm 24, der in seiner Anfangsstellung zum Garnleitarm 23 überkreuzt ist, ebenfalls um ein Stück nach unten bewegt, so daß die von dem Verlängerungsstücken 43, 44 frei herabhängenden Enden der Garne 27, 28 in den Einzugsspalt gelangen (Figur 3a) und von der sich drehenden Preßwalze 46 sowie dem sich drehenden Rollballen 47 mitgenommen werden. Mit der entsprechenden Geschwindigkeit beginnt sich nun die Seilscheibe 39 zu drehen und betätigt das Getriebe. Aufgrund der Untersetzung durch das Getriebe verschwenken die beiden Garnleitarme 23, 24 erheblich langsamer als es dem Abspulen der beiden Bindegarne 27, 28 entspricht und zwar gegensinnig von der ursprünglichen überkreuzten Anfangsstellung bis zu einer Maximalstellung, die dem Binden der äußeren Enden des Rollballens 47 entspricht und anschließend bis in eine Endstellung, die in etwa der Anfangsstellung beim Binden entspricht.

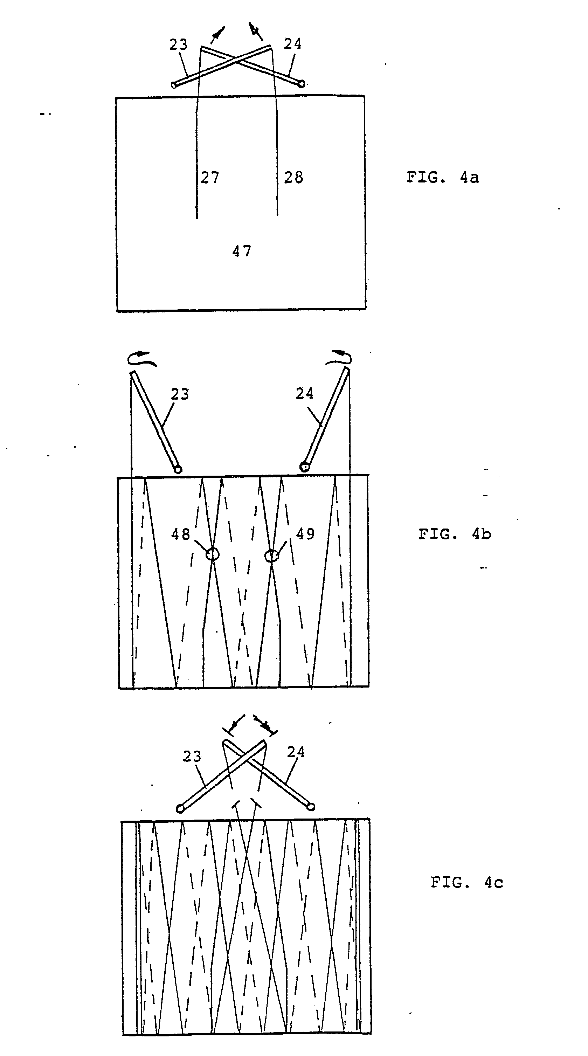

Das entsprechende Wicklungsschema ist in den Figuren 4a bis 4c dargestellt. Dabei entspricht 4a der Anfangsstellung, in der also die beiden Garnleitarme 23, 24 überkreuzt sind und Figur 4b der Maximalstellung, in der die beiden Garnleitarme die Enden des Rollballens 47 umwickeln. Figur 4c zeigt die Endstellung, in der die Garnleitarme 23, 24 wieder in etwa ihrer Anfangsstellung entsprechen. Diesen Figuren ist deutlich zu entnehmen, daß sofort nach Beginn des Bindevorgangs zwei Kreuzungsstellen 48, 49 der beiden Bindegarne 27, 28 entstehen, wodurch ein erheblich besserer Druck auf den Ballen ausgeübt werden kann, der somit strammer gewickelt werden kann als es bisher möglich war. Figur 4c zeigt ferner, daß im Bereich der Enden des Rollballens 47 mehrere Windungen direkt nebeneinanderliegen, da sich die Garnleitarme 23, 24 an diesen Stellen langsamer bewegen als im Bereich zwischen Maximalstellung und Endstellung.

Die Umwicklung des Rollballens beginnt also in seiner Mitte und ist, da jeder Garnleitarm 23, 24 etwa einen Viertelkreis beschreibt und zwar in beiden Richtungen, erheblich schneller beendet unter Erzielung eines gleichmäßigen und festen Bindens des Ballens 47, wobei kurz vor dem Ende des Umwicklungsvorgangs eine weitere Überkreuzung der Garne in der Mitte entsteht. Ein wichtiger Vorteil ist also, daß sowohl zu Beginn des Bindevorgangs als auch vor dessen Ende Überkreuzungen der Bindegarne entstehen, so daß sehr stramm gewickelt werden kann bei gleichzeitiger Aufrechterhaltung der zylindrischen Form.

Um ein vollautomatisches Arbeiten der erfindungsgemäßen Vorrichtung zu erzielen, müssen die Bindegarne 27, 28 nach Beendigung des Bindevorgangs abgetrennt werden. Zu diesem Zweck ist eine Schneideinrichtung 45 vorgesehen, die beweglich an der Querstrebe 22 angeordnet ist und von einem der Garnleitarme verschoben werden kann von ihrer Ruhestellung bis in eine Schneidstellung, in der die beiden Garne abgetrennt werden.

In Figur 2a und in Figur 3a ist die Schneidvorrichtung 45 in ihrer Schneidstellung dargestellt. Der linke Garnleitarm 23, der im Uhrzeigersinn verschwenkt wird und der rechte Garnleitarm 24, der entgegen dem Uhrzeigersinn verschwenkt wird, führen die beiden Garnstränge 27, 28 in eine Aussparung in der Schneidvorrichtung 45, in der zwei sich gegenüberliegende (nicht dargestellte) Messer vorgesehen sind. Dabei läuft der Garnstrang 28 des linken Garnleitarms 23 gegen ein rechts liegendes Messer und der Garnstrang 27 des rechts liegenden Garnleitarms 24 bewegt sich analog hierzu auf ein links liegendes Messer, so daß beide Garnstränge abgeschnitten werden.

Die Schneidvorrichtung 45 ist über ein Verbindungsgestänge und eine Schaltkulisse 30 mit dem rechts liegenden Garnleitarm 24 verbunden. Hierzu ist am Garnleitarm 24 ein Nocken 31 vorgesehen, der in eine Ausnehmung 32 der Schaltkulisse 30 eingreift. Unterhalb der Schaltkulisse ist ein zweiarmiger Hebel 33 vorgesehen, der an einem Bolzen 34 schwenkbeweglich gelagert ist. Das rechts liegende Ende des Hebels 33 weist eine vorspringende Nase 35 auf, die in der Bewegungsbahn des sich entgegen dem Uhrzeigersinn verschwenkenden rechten Garnleitarms 24 liegt.

Zusätzlich wirkt auf die Schaltkulisse 30 die Kraft einer Feder 36 und zwar so, daß die Ausnehmung 32 immer am Nocken 31 anliegt.

Am Ende der Schwenkbewegung des rechten Garnleitarms 24 gelangt dieser zur Anlage an der Nase 35. Der Hebel 33 wird im Uhrzeigersinn verschwenkt und drückt mit seinem links liegenden Ende die Schaltkulisse 30 nach oben. Hierdurch gelangen der Nocken 31 und die Ausnehmung 32 außer Eingriff und die Zugfeder 36 zieht die Schneidvorrichtung 45 über das Verbindungsgestänge nach rechts aus der Schneidstellung. Die Schaltkulisse 30 gleitet hierbei mit ihrer unteren Kante auf den Nocken 31.

Die Rundballenpresse ist nun bereit für die Ausbildung eines neuen Rollballens. Nach dessen Fertigstellung und nach seinem Binden wird die Schneidvorrichtung 45 wieder aus ihrer Ruhelage in ihre Schneidstellung bewegt. Zu diesem Zweck ist der rechts liegende Garnleitram 24 an seiner Rückseite mit einem weiteren (gestrichelt eingezeichneten) Nocken 37 versehen. Dieser Nocken 37 arbeitet mit einer vorspringenden Nase 38 der Schaltkulisse zusammen.

Die Schneidvorrichtung 45, das Verbindungsgestänge und die Schaltkulisse 30 müssen aus ihrer (nicht dargestellten) rechts liegenden Endlage, in die sie durch die Zugfeder 36 überführt wurden, nach einem Wickelvorgang wieder in die eingezeichnete Schneidlage zurückgeführt werden.

Sobald der rechts liegende Garnleitarm 24 in seine äußerste gestrichelt gezeichnete Endlage überführt ist, hat der Schaltnocken 37 die Anschlagnase 38 überfahren und hintergreift mit seiner Kante 37' die Nase 38. Bei der nun entgegen dem Uhrzeigersinn folgenden Schwenkbewegung des rechten Garnleitarms 24 verschiebt der Nocken 37 durch seine Anlage an der Nase 38 die Schaltkulisse mit der Schneidvorrichtung nach links bis die Verriegelung zwischen dem Nocken 31 und der Ausnehmung 32 der Schaltkulisse 30 erneut hergestellt ist. Die Schneidvorrichtung kann dann in ihre endgültige Schneidstellung verfahren werden.

In den Figuren 3a und 3b sind die Garnleitarme schematisch in Seitenansicht dargestellt. Figur 3a gibt die Stellung wieder, in der die Schneidvorrichtung 45 wirksam ist, während Figur 3b die Garnleitarme in ihrer untersten Stellung zeigt, also dann, wenn die relativ kurzen herabhängenden Enden der Garne 27, 28 durch die umlaufende Preßwalze 46 und den Rollballen 47 erfaßt und eingezogen werden.

Aufgrund der kurzen Bindezeit für den Rollballen in der Größenordnung von 8 bis 10 Sekunden wird eine erheblich größere Flächenleistung erzielt als mit den bisher bekannten Bindeanordnungen. Aufgrund des vollautomatischen Einsetzens des Bindevorgangs sowie des vollautomatischen Abschaltens nach Fertigstellung des Rollballens wird der Maschinenführer entlastet.

Ein weiterer Vorteil ist darin zu sehen, daß aufgrund der erfindungsgemäßen Ausgestaltung der Steuerung der Garnleitarme der Mittenbereich des zu bindenden Rollballens relativ schnell umfahren wird, jedoch die Randbereiche des Rollballens langsam überfahren werden, so daß an den beiden Enden des zylindrischen Rollballens mehrere Windungen nebeneinander gelegt werden.

## Patentansprüche

1. Vorrichtung zum Binden von Rollballen aus landwirtschaftlichem Erntegut bestehend aus mindestens einer Garnrolle, aus einer Garnleiteinrichtung, die mindestens einen Garnleitarm für einen Garnstrang aufweist und aus einer Steuervorrichtung für die Garnleiteinrichtung, die eine Seilscheibe und ein Getriebe aufweist, wobei die Garnleiteinrichtung über die Seilscheibe und das Getriebe vom Garnstrang antreibbar ist, dadurch gekennzeichnet, daß die Garnleiteinrichtung zwei Garnleitarme (23, 24) aufweist, deren Schwenkachsen im Abstand voneinander an einer Querstrebe (22) angeordnet sind, daß die beiden Garnleitarme gegensinnig zueinander in zwei nebeneinander liegenden Ebenen verschwenkbar sind und daß die beiden Garnleitarme über je eine Pleuelstange (40, 41), die an den Enden einer sich mit dem Getriebe drehenden Schwinge angelenkt sind, antreibbar sind von einer Anfangsstellung, in der sich die beiden Garnleitarme überkreuzen und die einem mittigen Umwickeln des Ballens entspricht, über eine Maximalstellung, die dem gleichzeitigen Umwickeln der beiden Enden des Ballens entspricht, bis zu einer Endstellung, die im wesentlichen der Anfangsstellung entspricht.

2. Vorrichtung nach Anspruch 1, dadurch gekennzeichnet, daß das Getriebe ein Klinkentrieb mit einer Untersetzung von 1 : 50 bis 1 : 60 ist.

3. Vorrichtung nach Anspruch 1, dadurch gekennzeichnet, daß das Getriebe ein Planetengetriebe ist, das in der Seilscheibe angeordnet ist, mit einer Untersetzung von 1 : 50 bis 1 : 60.

4. Vorrichtung nach Ansprüchen 1 bis 3, dadurch gekennzeichnet, daß sie mit einer Auslöseeinrichtung (19) versehen ist, die über ein Gestänge (18, 17, 21) mit der Heckklappe (3) der Rollballenpresse verbunden ist und die Vorrichtung bei Öffnen der Heckklappe in Betrieb setzt.

5. Vorrichtung nach Ansprüchen 1 bis 4, dadurch gekennzeichnet, daß die Auslöseeinrichtung (19) eine mit einer Aussparung (53) versehene Strebe (52) aufweist, in die ein Sperrhaken (54) eingreift und daß der Sperrhaken (54) über eine Zugfeder mit einem der Garnleitarme (23) verbunden ist.

6. Vorrichtung nach Anspruch 4, dadurch gekennzeichnet, daß eine Schubstange (18) als Teil des Gestänges zur Betätigung der Auslöseeinrichtung (19) mit einem zweiarmigen verschwenkbaren Hebel (17) verbunden ist, der seitlich am vorderen Teil (2) der Preßkammer angelenkt ist und der durch Anheben des rückwärtigen verschwenkbaren Teils (3) der Preßkammer betätigbar ist.

7. Vorrichtung nach Anspruch 1, dadurch gekennzeichnet, daß an den äußeren freien Enden der Garnleitarme (23, 24) schwenkbeweglich angebrachte Verlängerungen (43, 44) vorgesehen sind, an deren unteren Enden Garnbremsen (25, 26) vorgesehen sind.

8. Vorrichtung nach einem der vorhergehenden Ansprüche, dadurch gekennzeichnet, daß sie mit einer Schneidvorrichtung (45) versehen ist, die durch einen der Garnleitarme (24) von einer Ruhestellung in eine Arbeitsstellung und umgekehrt verschiebbar ist.

9. Vorrichtung nach Anspruch 8, dadurch gekennzeichnet, daß die Schneidvorrichtung (45) über eine Schaltkulisse (30) mit dem Garnleitarm (24) verbunden ist, daß am Garnleitarm (24) ein Nocken (31) vorgesehen ist, der in eine Ausnehmung (32) der Schaltkulisse (30) eingreift und daß ein schwenkbeweglich an einem Bolzen (34) gelagerter zweiarmiger Hebel (33) vorgesehen ist, mit einem Vorsprung (35), auf dem sich der Garnleitarm (24) während seiner Bewegung abstützt.

10. Vorrichtung nach Anspruch 9, dadurch gekennzeichnet, daß die Schaltkulisse (30) mit einer Feder (36) derart verbunden ist, daß die Ausnehmung (32) am Nocken (31) anliegt.

11. Vorrichtung nach Anspruch 10, dadurch gekennzeichnet, daß der Garnleitarm (24) an seiner Rückseite mit einem Nocken (37) versehen ist, der mit einem Vorsprung (38) der Schaltkulisse zusammenwirkt.

12. Vorrichtung nach Anspruch 11, dadurch gekennzeichnet, daß die Schneidvorrichtung (45) mit zwei Messern bestückt ist.

13. Vorrichtung nach einem der vorhergehenden Ansprüche, dadurch gekennzeichnet, daß die Seilscheibe (39) über einen Exzenter und über die Schwinge mit dem Getriebe verbunden ist und daß das Getriebe einen Kurbeltrieb für die Garnleitarme (23, 24) betätigt, an dem die beiden Pleuelstangen (40, 41) um 180° versetzt zueinander angeordnet sind.

14. Vorrichtung nach Anspruch 4, dadurch gekennzeichnet, daß das Gestängeteil (21) eine Anschlagnase ist, die an einem am verschwenkbaren Teil (3) des Preßraums drehbar gelagerten Hebel (5) befestigt ist, der von der Kraft einer Zugfeder (6) beaufschlagt ist und daß am Hebel (5) ein Verriegelungshaken (8) angeordnet ist, der lösbar einen Bolzen (9) am vorderen, feststehenden Teil (2) des Preßraums umgreift.

15. Vorrichtung nach einem der vorhergehenden Ansprüche, dadurch gekennzeichnet, daß am feststehenden Teil (2) des Preßraums ein einfach wirkender Hydraulikzylinder (10) vorgesehen ist, wobei am freien Ende der Kolbenstange (11) eine Strebe (15) angelenkt ist, die mit einem Verriegelungshaken (8) zum Verbinden der Heckklappe mit der Presse verbunden ist.

## Claims

1. Apparatus for binding rolled bales formed from agricultural crops, comprising at least one twine reel, a twine guiding means having at least one twine guiding arm for one strand of twine, and a control mechanism for the twine guiding means which includes a rope pulley and a drive gear, the twine guiding means being drivable by the strand of twine via the rope pulley and the drive gear, characterised in that the twine guiding means includes two twine guiding arms (23, 24), which have their pivotal axles spaced from each other on a transverse strut (22), in that the two twine guiding arms are pivotable in opposite directions to each other in two planes lying adjacent to each other, and in that the two twine guiding arms are each drivable via a respective connecting rod (40, 41), which rods are pivotally mounted on the ends of a rotating arm which rotates with the drive gear, from an initial position, in which the two twine guiding arms cross over each other and which corresponds to a central wrapping of the bale, via a maximum position, which corresponds to the simultaneous wrapping of the two ends of the bale, to a final position which substantially corresponds to the initial position.

2. Apparatus according to claim 1, characterised in that the drive gear is a ratchet gear having a speed reduction of 1 : 50 to 1 : 60.

3. Apparatus according to claim 1, characterised in that the drive gear is a planetary gear, which is disposed in the rope pulley, having a speed reduction of 1 : 50 to 1 : 60.

4. Apparatus according to claims 1 to 3, characterised in that it is provided with a releasing means (19) which is connected to the rear flap (3) of the rotary baler via a linkage (18, 17, 21) and sets the apparatus in motion by opening the rear flap.

5. Apparatus according to claims 1 to 4, characterised in that the releasing means (19) includes a strut (52) which is provided with a recess (53) and in which a locking pawl (54) engages, and in that the locking pawl (54) is connected to one of the twine guiding arms (23) via a tension spring.

6. Apparatus according to claim 4, characterised in that a push-rod (18), serving as part of the linkage for actuating the releasing means (19), is connected to a two-armed, pivotable lever (17) which is pivotally mounted laterally on the front portion (2) of the pressure chamber and which is actuable by raising the rear, pivotable portion (3) of the pressure chamber.

7. Apparatus according to claim 1, characterised in that extensions (43, 44) are pivotally mounted on the outer, free ends of the twine guiding arms (23, 24), and twine arresters (25, 26) are provided on the lower ends of the extensions.

8. Apparatus according to one of the preceding claims, characterised in that it is provided with a cutting mechanism (45) which is displaceable, by means of one of the twine guiding arms (24), from a position of rest into an operative position and vice versa.

9. Apparatus according to claim 8, characterised in that the cutting mechanism (45) is connected to the twine guiding arm (24) via a control slide (30), in that a cam (31) is provided on the twine guiding arm (24) and engages in a recess (32) in the control slide (30), and in that a two-armed lever (33), which is pivotally mounted on a bolt (34), is provided with a projection (35) which supports the twine guiding arm (24) during its movement.

10. Apparatus according to claim 9, characterised in that the control slide (30) is connected to a spring (36) in such a manner that the recess (32) abuts against the cam (31).

11. Apparatus according to claim 10, characterised in that the twine guiding arm (24) is provided on its rear end with a cam (37) which co-operates with a projection (38) of the control slide.

12. Apparatus according to claim 11, characterised in that the cutting mechanism (45) is provided with two blades.

13. Apparatus according to one of the preceding claims, characterised in that the rope pulley (39) is connected to the drive gear via an eccentric and via the rotating arm, and in that the drive gear actuates a crank drive assembly for the twine guiding arms (23, 24), and the two connecting rods (40, 41) are disposed on the crank drive assembly so as to be offset from each other by 180°.

14. Apparatus according to claim 4, characterised in that the linkage member (21) is a stop projection which is secured to a lever (5) which is rotatably mounted on the pivotable portion (3) of the pressure chamber and is acted upon by the force of a tension spring (6), and in that a locking catch (8) is disposed on the lever (5) and engages detachably around a bolt (9) on the front, stationary portion (2) of the pressure chamber.

15. Apparatus according to one of the preceding claims, characterised in that a single-acting hydraulic cylinder (10) is provided on the stationary portion (2) of the pressure chamber, a strut (15) being pivotally mounted on the free end of the piston rod (11) and being connected to a locking catch (8) to connect the rear flap to the baler.

**Revendications**

1. Mécanisme de liage de balles rondes de récolte agricole, consistant en au moins une bobine de ficelle, en un dispositif de guidage de la ficelle qui présente au moins un bras de guidage de la ficelle, et en un dispositif de commande pour le dispositif de guidage de la ficelle, qui présente une poulie de renvoi et un engrenage, un dispositif de guidage de la ficelle pouvant être entraîné par la ficelle par l'intermédiaire de la poulie de renvoi et de l'engrenage, caractérisé en ce que le dispositif de guidage de la ficelle présente deux bras de guidage (23, 24) de la ficelle, dont les axes pivotants sont disposés à une certaine distance l'un de l'autre sur une entretoise (22), en ce que les deux bras de guidage de la ficelle sont pivotables en sens contraire l'un par rapport à l'autre en deux plans situés côte à côte, et en ce que les deux bras de guidage de la ficelle sont actionnables par l'intermédiaire chacun d'une bielle (40, 41), ces bielles étant articulées aux extrémités d'une coulisse qui tourne avec l'engrenage, d'une position de départ, dans laquelle les deux bras de guidage de la ficelle se croisent et qui correspond à un ficelage central de la balle, en passant par une position maximale, qui correspond au ficelage simultané des deux extrémités de la balle, jusqu'à une position finale, qui correspond sensiblement à la position de départ.

2. Mécanisme selon la revendication 1, caractérisé en ce que l'engrenage est un engrenage à cliquet avec une démultiplication de 1 : 50 à 1 : 60.

3. Mécanisme selon la revendication 1, caractérisé en ce que l'engrenage est un engrenage planétaire disposé dans la poulie de renvoi avec une démultiplication de 1 : 50 à 1 : 60.

4. Mécanisme selon les revendications 1 à 3, caractérisé en ce qu'il est pourvu d'un dispositif de déclenchement (19), qui est relié au hayon (3) de la presse à balles rondes par l'intermédiaire d'un système de tiges (18, 17, 21) et qui met le mécanisme en marche lors de l'ouverture du hayon.

5. Mécanisme selon les revendications 1 à 4, caractérisé en ce que le dispositif de déclenchement (19) présente une jambe de force (52) munie d'un évidement (53) dans lequel s'engrène un arrêt (54), et en ce que l'arrêt (54) est relié à l'un des bras de guidage (23) de la ficelle par l'intermédiaire d'un ressort de traction.

6. Mécanisme selon la revendication 4, caractérisé en ce qu'une jambe de force (18), qui fait partie du système de tiges actionnant le dispositif de déclenchement (19), est reliée à un levier pivotant à deux bras (17), qui est articulé latéralement à la partie avant (2) de la chambre de presse et qui peut être actionné par soulèvement de la partie arrière pivotante (3) de la chambre de presse.

7. Mécanisme selon la revendication 1, caractérisé en ce qu'aux extrémités libres externes des bras de guidage (23, 24) de la ficelle sont prévus des prolongements pivotants (43, 44) aux extrémités inférieures desquels sont disposés des freins (25, 26) pour la ficelle.

8. Mécanisme selon l'une des revendications précédentes, caractérisé en ce qu'il présente un dispositif de coupe (45) qui est déplaçable par l'un des bras de guidage (24) de la ficelle d'une position de repos dans une position de travail et inversement.

9. Mécanisme selon la revendication 8, caractérisé en ce que le dispositif de coupe (45) est relié au bras de guidage (24) de la ficelle par l'intermédiaire d'une coulisse de manœuvre (30), en ce que sur le bras de guidage (24) de la ficelle est prévu un ergot (31) qui s'engrène dans un évidement (32) de la coulisse de manœuvre (30), et en ce qu'un levier pivotant (33) à deux bras disposé sur un axe (34) est prévu, qui comporte une saillie (35) sur laquelle s'appuie le bras de guidage (24) de la ficelle pendant son mouvement.

10. Mécanisme selon la revendication 9, caractérisé en ce que la coulisse de manœuvre (30) est reliée à un ressort (36) de telle façon que l'évidement (32) repose sur l'ergot (31).

11. Mécanisme selon la revendication 10, caractérisé en ce que le bras de guidage (24) de la ficelle est muni sur sa face dorsale d'un ergot (37) qui coopère avec une saillie (38) de la coulisse de manœuvre.

12. Mécanisme selon la revendication 11, caractérisé en ce que le dispositif de coupe (45) est muni de deux couteaux.

13. Mécanisme selon l'une des revendications précédentes, caractérisé en ce que la poulie de renvoi (39) est reliée à l'engrenage par l'intermédiaire d'un excentrique et d'une manivelle oscillante, et en ce que l'engrenage actionne une commande à manivelle pour les bras de guidage (23, 24) de la ficelle, sur laquelle sont disposées les deux bielles (40, 41) décalées de 180° l'une par rapport à l'autre.

14. Mécanisme selon la revendication 4, caractérisé en ce que la partie de tige (21) est une came de butée, qui est fixée à un levier (5) disposé de façon à pouvoir tourner sur la partie pivotante (3) de la chambre de presse, et qui est sollicité par la force d'un ressort de traction (6), et en ce que sur le levier (5) est disposé un crochet de verrouillage (8) qui chevauche de façon amovible une cheville (9) disposée sur la partie avant fixe (2) de la chambre de presse.

15. Mécanisme selon l'une des revendications précédentes, caractérisé en ce qu'un vérin hydraulique à simple effet (10) est prévu sur la partie fixe (2) de la chambre de presse tandis qu'à l'extrémité libre de la tige de piston (11) est articulée une jambe de force (15) qui est reliée à un crochet de verrouillage (8) pour relier le hayon à la presse.

FIG. 1

FIG. 2b

FIG. 2a

0 157 898

**0 157 898**

FIG. 3a

23
24
45
46
47

FIG. 3b

23
24
46
47

3

23 24

27 28

47

FIG. 4a

23 24

48 49

FIG. 4b

23 24

FIG. 4c

4